# EUROPEAN PATENT APPLICATION

(11) **EP 1 025 787 A1**
(43) Date of publication of application: **09.08.2000**
(21) Application number: 00102425.6
(22) Date of filing: 04.02.2000
(51) Int. Cl.: A47J 37/12, G07F 9/10

(54) **Frying apparatus particularly useful in automatic vending machines**

(30) Priority: 07.02.1999 IL 12841099
(71) Applicant: Gavish, Ron, Rishon Le Zion 75214 (IL)
(72) Inventor: Gavish, Ron, Rishon Le Zion 75214 (IL)
(74) Representative: Weber, Dieter, Dr.

(57) **Abstract**

Frying apparatus particularly useful in automatic vending machines is provided. The apparatus includes a housing (2) having an entrance (6) for introducing therein food articles to be fried and an exit (8) for outletting the food articles after having been fried; a frying compartment (3) within the housing for receiving a quantity of oil to produce an oil bath (4) therein; a heater (50) for heating the oil; and a conveyor assembly (9) including a conveyor control for conveying the food articles from the entrance, through the oil bath in the frying compartment, through a draining region between the oil bath and the exit, and then to the exit.

## Description

### FIELD AND BACKGROUND OF THE INVENTION

The present invention relates to frying apparatus for frying various types of food articles, such as potato sticks, potato slices, schnitzel, frankfurters, shrimps, and other articles which are deep fried in oil. The invention is particularly useful in frying apparatus incorporated in automatic vending machines for vending fried potato sticks, and is therefore described below with respect to such an application.

Various types of frying apparatus have been developed and are now available, but they are mostly designed as appliances for industrial and home use wherein the food articles to be fried, such as potato sticks or potato slices, are manually introduced into the heated oil and manually removed therefrom. Such appliances are, therefore, not suitable for use in automatic vending machines for vending fried food articles.

### OBJECT AND BRIEF SUMMARY OF THE INVENTION

An object of the present invention is to provide frying apparatus particularly useful in automatic vending machines, but also useful in other applications.

According to a broad aspect of the present invention, there is provided frying apparatus comprising a housing having an entrance for introducing therein food articles to be fried, and an exit for outletting the food articles after having been fried; a frying compartment within the housing for receiving a quantity of oil to produce an oil bath therein; a heater for heating the oil; and a conveyor assembly including a conveyor control for conveying the food articles from the entrance, through the oil bath in the frying compartment, through a draining region between the oil bath and the exit, and then to the exit.

According to further features in the described preferred embodiment, the conveyor control produces a first dwell for a first time interval while the food articles are in the oil bath, and a second dwell for a second time interval when the food articles are in the draining region. Preferably, the first time interval is 60 - 120 seconds, and the second time interval is 5 - 30 seconds.

According to further features in the preferred embodiment of the invention described below, the conveyor assembly includes: a closed loop device having an upper stretch descending from the entrance towards the oil bath, and a lower stretch ascending from the oil bath to the exit; and at least one food conveyor unit fixed to the closed loop device and effective, when traversing the descending upper stretch, to convey a quantity of the unfried food articles to the oil bath, and when traversing the ascending lower stretch to convey the fried food articles through the draining region and to the exit.

More particularly, and in accordance with further features in the described preferred embodiment, the upper stretch of the closed loop device is straddled on its opposite sides by an upper pair of walls fixed with respect to the housing and between which the food conveyor unit moves when conveying the unfried food articles to the oil bath; and the lower stretch of the closed loop device is straddled on its opposite sides by a lower pair of walls joined by a bottom wall fixed with respect to the housing and between which the food conveyor unit moves when conveying the fried food articles from the oil bath through the draining region to the exit.

According to still further features in the described preferred embodiment, the food conveyor unit fixed to the closed loop device includes a pair of end walls extending perpendicularly to and transversely of the closed loop device, the end walls being joined at their lower ends to a bottom wall extending parallel to the closed loop. The end wall at the leading end of the food conveyor unit in the direction of movement thereof is higher than the end wall at the trailing end of the food conveyor unit. The arrangement is such that the leading end wall is effective to retain the unfried food articles between it and the upper pair of fixed walls during the movement of the food conveyor unit through its upper descending stretch, and to push the fried food articles between the lower pair of fixed walls and the bottom wall during the movement of the food conveyor unit through its lower ascending stretch. The bottom wall joined to the lower pair of fixed walls is perforated to permit direct contact of the food articles with the oil within the oil bath when the food articles are in the oil bath, and draining of oil from the food articles when ascending out of the oil bath.

As will be described more particularly below, frying apparatus constructed in accordance with the foregoing features may be designed to provide automatic control for the introduction of the food articles into the oil bath, the removal of such food articles from the oil bath, the draining of the food articles, and the conveying of the food articles to the exit of the housing, such as to make such frying apparatus particularly suitable for use in automatic vending machines.

Further features and advantages of the invention will be apparent from the description below.

### BRIEF DESCRIPTION OF THE DRAWINGS

The invention is herein described, by way of example only, with reference to the accompanying drawings, wherein:
FIG. 1 is a side elevational view diagramatically illustrating one form of frying apparatus constructed in accordance with the present invention;
FIG. 2 is a top plan view of the apparatus of FIG. 1;
FIG. 3 is a front elevation view of the apparatus of FIGS. 1 and 2;
FIGS. 4, 5 and 6 are side, top and front views, respectively, of an upper fixed frame structure cooperating with the conveyor assembly included in the frying apparatus of FIGS. 1 - 3;
FIGS. 7, 8 and 9 are front, top and side views, respectively, of a lower fixed frame structure cooperating with the conveyor assembly included in the frying apparatus of FIGS. 1 - 3;
FIG. 10 is a top plan view of the electrical heating body in the apparatus of FIGS. 1-3; and
FIG. 11 illustrates a quick coupler included in the apparatus of FIGS. 1-3 for decoupling the drive motor when the housing lid is detached for cleaning the interior of the housing or adding oil thereto.

### DESCRIPTION OF A PREFERRED EMBODIMENT

The frying apparatus illustrated in the drawings is designed particularly for use in automatic vending machines for vending fried food articles, such as potato sticks or potato slices, commonly called French fries. The illustrated apparatus includes a housing 2 of generally rectangular configuration, preferably made of stainless steel so as to define, at its lower end, a frying compartment 3 for receiving a quantity of oil to produce an oil bath 4. The upper end of housing 2 is closed by a lid 5 which is removable from the housing so as to provide access into its interior. Lid 5 carries, at its upper end, a compartment 6 for receiving a predetermined quantity of food articles, such as potato sticks, to be fried by the oil within the oil bath 4.

When the illustrated apparatus is used in an automatic vending machine, the food articles to be fried would be stored within a refrigeration unit (not shown) such that a predetermined portion of the food articles, as controlled by a scale, would be dispensed into the food article compartment 6 when the required currency is introduced into the vending machine and the machine actuated. The food article compartment 6 is closed by a bottom wall 7 which is pivotal by an electrical motor M₁, upon the depositing of the required currency and the actuation of the machine, to dump the predetermined portion of the food articles, (e.g., potato sticks) onto a food conveyor assembly disposed within housing 5 underlying the food article compartment 6, for conveying the food articles through the oil bath 4 and to an exit in the form of a dispensing chute 8 to dispense the fried food articles.

The conveyor assembly within housing 2 is generally designated 9. It includes an upper frame structure 10 fixed to housing 2; a closed loop conveyor device 20 supported by the upper frame structure 10; two food conveyor units, each designated 30, movable by the closed loop conveyor device 20; and a lower frame structure 40 fixed to housing 2 below the closed loop conveyor device 20.

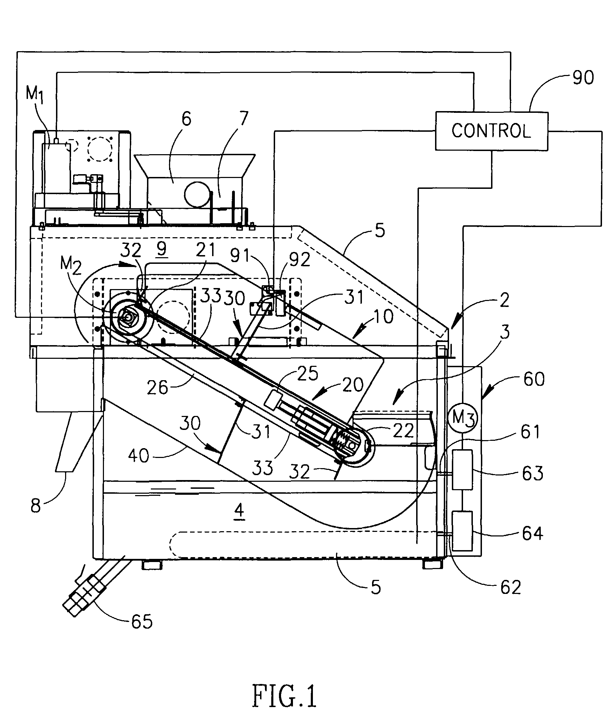

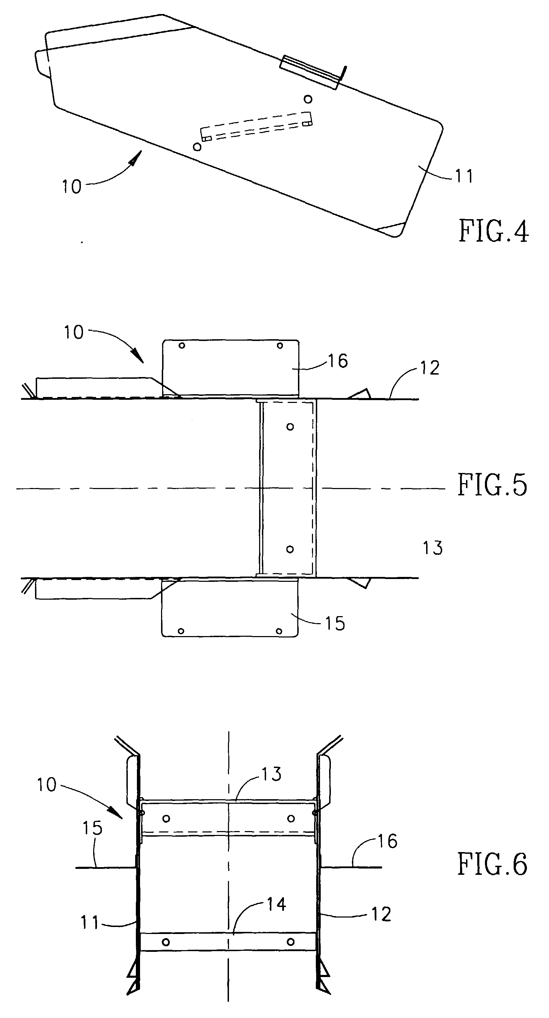

The upper frame structure 10 of the conveyor assembly 9 is more particularly illustrated in FIGS. 4 - 6. It includes a pair of vertical walls 11, 12, secured together in parallel spaced relationship by a pair of horizontal strips 13, 14, and secured to the housing 2 by a pair of flanges 15, 16. As shown particularly in FIG. 1, the upper frame structure 10 extends at a downward incline from the front end of the machine (the left end in FIG. 1) towards the rear end of the machine, with the front end of the frame structure directly underlying the food compartment 6.

The upper frame structure 10 is used for mounting the closed loop conveyor device 20. Device 20 includes a pair of toothed wheels rotatably mounted at each of the opposite ends of the upper frame structure 10, as shown at 21, 22, and a pair of closed-loop chains 23, 24 payed over the toothed wheels. The two chains are driven by a motor M₂ coupled to the upper toothed wheels 21. The clcosed loop device 20 is mounted at the same downward inclination as the upper frame structure 10. Accordingly, the closed-loop chains 23, 24 define an upper stretch 25 descending from the conveyor assembly 9 entrance underlying the food compartment 6, towards the oil bath 4 at the rear side of the machine (right side, FIG. 1); and a lower stretch 26 ascending from the oil bath 4 towards the dispensing chute 8 at the front side of the machine.

A food conveyor unit 30 is secured to the upper stretch 25 of the closed-loop chains 23, 24, and also to the lower stretch 26 of those chains. Each of the food container units 30 includes a pair of space walls 31, 32, joined to the opposite ends of a third wall 33. Wall 31 is at the leading end of its respective unit, whereas wall 32 is at the trailing end of the unit, with respect to the direction of movement of the closed-loop conveyor device 20 (clockwise FIG. 1). The two walls 31, 32, extend perpendicularly to the closed loop conveyor device 20, and their interconnecting bottom wall 33 extends parallel to the closed loop conveyor device. These walls thus define, with the fixed side walls 11, 12, a food-holding compartment for receiving and conveying an quantity of the food articles from the food article compartment 7 to the oil bath 4.

The leading wall 31, is substantially higher than the trailing wall 32. As will be described more fully below, this permits the leading wall 31 to retain the food articles, when received from the food article compartment 7, for conveying them between the front walls 11, 12 through the descending upper stretch of the conveyor device 20 towards the oil bath 4, and also to push the food articles between the fixed walls 11, 12, during the movement of the conveyor device 20 through its lower ascending stretch towards the dispensing shute 8 at the front side of the machine.

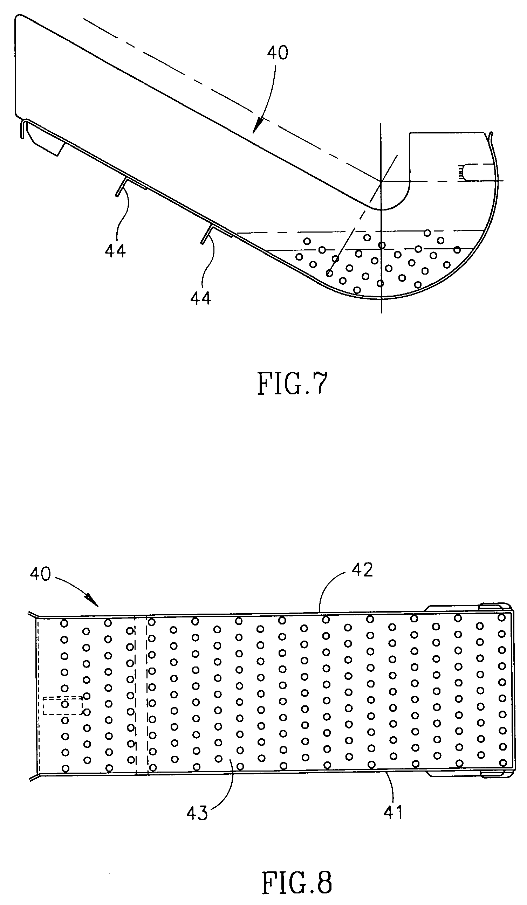

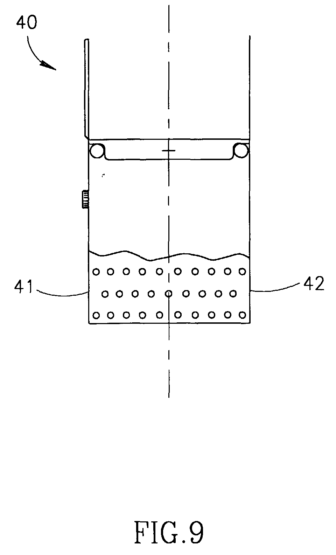

The lower frame structure 40 of the conveyor assembly 9 is below the closed loop conveyor device 20 and is best seen in FIGS. 7 - 9. It is of a channel configuration, including a pair of side walls 41, 42, interconnected by bottom wall 43. It is fixed by flanges 44 to the upper frame structure 10, which in turn is fixed to the machine housing 3. The lower frame structure 40 is therefore also oriented at an incline such that its lower end 45 is immersed within the oil bath 4, and its upper end 46 is raised above, and in alignment with, the dispensing shute 8 for dispensing the fried articles.

The portions of walls 41, 42, 43 immersed within the oil bath 4 are apertured to facilitate the free flow of oil from the bath 4 into the interior of the lower frame structure for contact with the food articles therein. Actually, and as shown particularly in FIG. 8, the complete bottom wall 43 is apertured to facilitate the drainage of the oil from the food articles back into the oil bath 4 as the food articles are conveyed along the lower stretch of the conveyor device towards the dispensing shute 8.

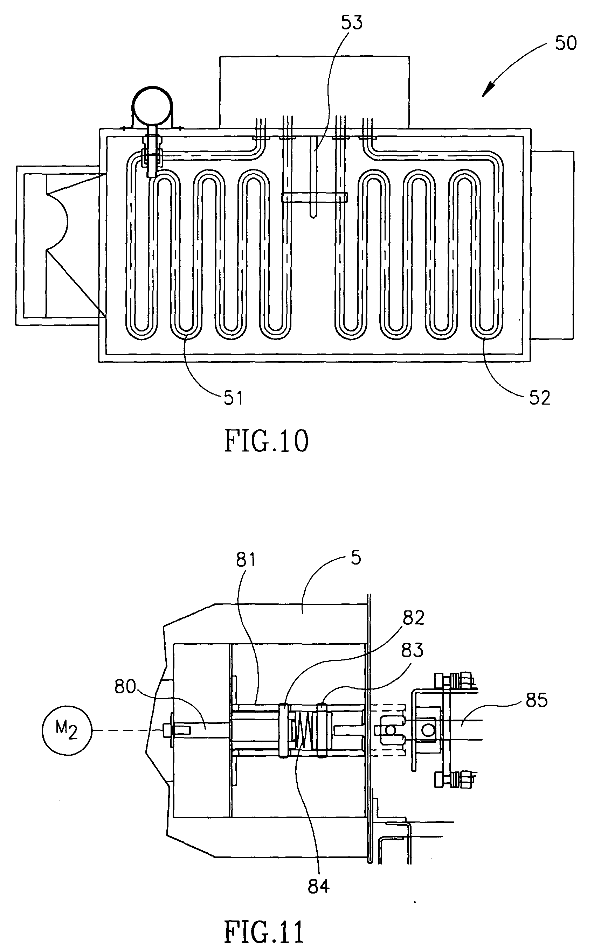

The illustrated machine further includes an electrical heater body, generally designated 50, at the bottom of the frying compartment 3 for heating the oil in the oil bath 4. FIG. 10 more particularly illustrates the construction of the heating body 50, wherein it will be seen that it includes two serpentine elements 51, 52 and a thermal controller 53.

The illustrated machine further includes a filter unit, generally designated 60 (FIG. 1) attached to the rear side of the machine. Filter unit 60 has an inlet 61 located to inlet oil from the upper region of the oil bath 4, and an outlet 62 located for discharging the filtered oil into the lower region of the oil bath. The circulation of the oil is produced by a pump 63 driven by an electrical motor M₃. Its filter body 64 is preferably of the cartridge type which permits convenient removal and replacement. Removal of the oil from the oil bath 4 is effected via a discharge valve 65 at the front side of the housing 2.

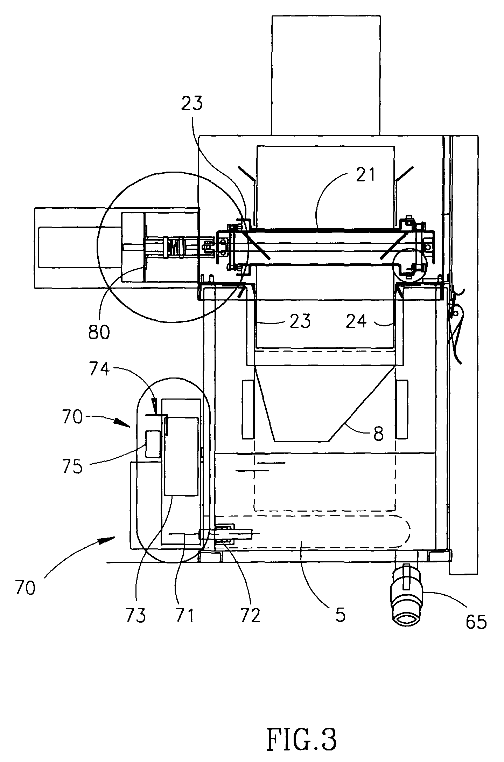

The level of the oil within the oil bath 4 is viewable via a liquid-level sighting device 70 diagramatically illustrated in FIG. 3. It includes a housing 71 having an inlet 72 connected to the bottom of the oil bath 4, and a float 73 which assumes the level of the oil within housing 71, and therefore within the oil bath 4. This level is viewable to the viewer by an indicator 74 carried by float 73. The illustrated sighting device 70 further includes a proximity switch 75 which is actuated to terminate the flow of electrical current to the heating body 50 should the oil within the oil bath 4 drop below a predetermined level.

As described earlier, the cover 5 is removable from the machine housing 2 in order to permit access into the interior of the housing for cleaning, repair and maintenance purposes. Cover 5 carries with it the food compartment 6, and the motor M₁ which pivots its bottom wall 7 of the food compartment to dump the food articles onto the conveyor assembly. Accordingly, the food compartment 6, together with its motor M₁, would be carried by the cover 5 when removed from the housing 2.

Motor M₂, which drives the conveyor assembly 9, is also carried by the cover 5 so that it would be removed with it. However, the remainder of the conveyor assembly 9 is not carried by cover 5 so that it would be retained within housing 2 when the cover is removed.

FIG. 11 illustrates a quick-coupling mechanism for decoupling the motor M₂ from the closed-loop conveyor device 20, particularly its drive wheels 21, to permit removal of the cover 5 with the motor M₂, and also to permit quick recoupling of the motor when the cover is reattached to the housing 2. As shown in FIG. 12, the removable cover 5, which carries the motor M₂, also carries the motor shaft shown at 80 and a hollow slotted shaft 81. A coupling pin 82 is secured to the motor shaft 80 and is movable within the slots of the hollow shaft 81. A second coupling pin 83 is also movable within the slots of hollow shaft 81. Coupling pin 83 is fixed to a coupling collar 84 adapted to be coupled to, or decoupled from, shaft 85 of the tooth wheel 21 in the closed loop conveyor device 20. the coupling mechanism illustrated in FIG. 11 further includes a spring 86 urging pin 83 outwardly, i.e., in the direction to effect a coupling between its collar 84 and shaft 85 of the closed loop conveyer device wheel 21.

Thus, whenever it is desired to remove cover 5 from housing 2, the user squeezes together the two pins 82, 83, thereby decoupling collar 84 from shaft 85. Motor shaft 80 is automatically coupled to the conveyor device shaft 85 by the spring 84 when the cover 5 is returned to its normal position with respect to housing 2.

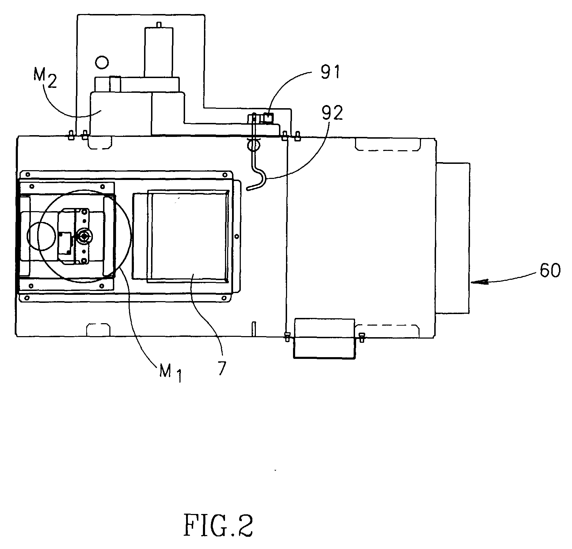

The overall operation of the illustrated machine is controlled by a control unit, generally designated 90 in FIG. 1, and also by a microswitch 91 (e.g., FIGS. 1 and 2) having an actuator 92 engageable by the leading wall 31 of each conveyor unit 30 when the conveyor unit is in proper position underlying the food compartment 6 for receiving a portion of the food articles (e.g., potato sticks) to be fried by the machine.

### OPERATION

The illustrated apparatus, when incorporated in a vending machine, operates as follows:

When an order is received from a purchaser for fried potato sticks, (e.g., by the purchaser inserting the required currency within the machine and operating a Start button, not shown), a predetermined portion of the potato sticks (preferably predetermined by a weighing scale, not shown) is introduced into the food compartment 6 from a refrigerated unit (not shown). Motor M₁ pivots the bottom wall 7 of the food compartment to dump the predetermined portion of the potato sticks onto the feed conveyor unit 30 of the conveyor assembly 9 underlying the food compartment. The proper positioning of one of the two food conveyor units 30 directly under the food compartment is assured by the microswitch actuator 92 which had been actuated in the previous cycle to terminate the movement of the closed loop conveyor device 20 when its food conveyor unit 30 was directly under the food compartment 6.

As the unfried food articles are being dumped into the underlying food conveyor unit 30, the food articles are retained in that unit by the high leading wall 31 and the two fixed side walls 11, 12 of the upper frame structure 10 of the conveyor assembly 9.

After food articles have been dumped into the food conveyor unit 30, motor M₂ is energized by the control unit 90 to cause the food conveyor unit, together with the food articles contained therein, to move downwardly along the descending stretch 25 of the closed loop conveyor device 20 to convey the food articles into the oil bath 4. When the food articles are immersed in the oil bath 4, control unit 90 interrupts the operation of the motor M₂ to provide a dwell period for the food articles to be in direct contact with the hot oil of the oil bath. The holes within the walls 41, 42, 43 of the lower channel structure 40 facilitate this direct contact of the hot oil with the food articles.

After a predetermined dwell period, as preset by control 90, the closed loop conveyor device 20 is reactuated by restarting motor M₂, such that the food conveyor unit 30, which had previously moved through the descending stretch 25 of the closed loop conveyor device 20 to bring the food articles into the oil bath 4, now moves along the ascending stretch 26 of the closed loop conveyor device 20 to remove the food articles from the oil bath. This is done by the high leading wall 31 of the food conveyor unit 30 pushing the food articles upwardly between the side walls 41, 42 and the bottom wall 43 of the lower channel structure 40.

After the food articles have thus been moved out of the oil bath 4 but before they reach the dispensing shute 8, motor M₂ is again interrupted by control unit 90 for a second dwell period to permit surplus oil on the food articles to drain back into the bath. This draining is permitted by the openings formed through the lower bottom wall 43 of the lower channel structure 40. This drain period, which occurs within the draining region between the oil bath 4 and the dispensing shute 8, is also preset by the control unit 90.

After this draining period, motor M₂ is again re-started to complete the conveyance of the fried food articles to the dispensing shute 8, through which they are dispensed into a cup (not shown) placed or held by the customer. However, the conveyor device continues to operate until the food conveyor unit 30 engages actuator 92 of microswitch and 91, which terminates the operation of motor M₂, when the food conveyor unit 30 is properly positioned under the food compartment 6 for receiving the next order.

As one example, the preset time for the first dwell period during which the food articles are immersed within the hot oil bath 4 is from 60 - 120 seconds, preferably about 90 seconds; whereas the second dwell period during which the food articles, after having been removed from the bath, are permitted to drain within the draining region between the oil bath and the dispensing Shute 8, is from 5 - 30 seconds, preferably about 10 seconds, However, these time periods may be preset as desired according to the conditions in each installation.

Providing two food conveyor units 30, as shown, permits the time to be shortened when multiple orders are received.

While the invention has been described with respect to one preferred embodiment, it will be appreciated that this is set forth merely for purposes of example, and that many other variations, modifications and applications of the inventions may be made.

## Claims

1. Frying apparatus, comprising
a housing having an entrance for introducing therein food articles to be fried, and an exit for outletting the food articles after having been fried;
a frying compartment within said housing for receiving a quantity of oil to produce an oil bath therein;
a heater for heating said oil; and
a conveyor assembly including a conveyor control for conveying the food articles from said entrance, through the oil bath in the frying compartment, through a draining region between the oil bath and said exit, and then to said exit.

2. The frying apparatus according to claim 1, wherein said conveyor control produces a first dwell for a first time interval while the food articles are in the oil bath, and a second dwell for a second time interval when the food articles are in said draining region.

3. The frying apparatus according to claim 2, wherein said first time interval is 60 - 120 seconds, and said second time interval is 5 - 30 seconds.

4. The frying apparatus according to either of claims 2 or 3, wherein said conveyor control includes an electrical switch which is actuated by the conveyor assembly to terminate the end of a cycle of operation of the conveyor assembly.

5. The frying apparatus according to claim 1, wherein said conveyor assembly includes:
a closed loop device having an upper stretch descending from the entrance towards the oil bath, and a lower stretch ascending from the oil bath to the exit; and
at least one food conveyor unit fixed to said closed loop device and effective, when traversing said descending upper stretch, to convey a quantity of the unfried food articles to said oil bath, and when traversing said ascending lower stretch to convey the fried food articles through said draining region and to said exit.

6. The frying apparatus according to claim 5,
wherein said upper stretch of the closed loop device is straddled on its opposite sides by an upper pair of walls fixed with respect to said housing and between which said food conveyor unit moves when conveying the unfried food articles to the oil bath; and
wherein said lower stretch of the closed loop device is straddled on its opposite sides by a lower pair of walls joined by a bottom wall fixed with respect to said housing and between which said food conveyor unit moves when conveying the fried food articles from said oil bath through said draining region to said exit.

7. The frying apparatus according to claim 6, wherein said food conveyor unit fixed to the closed loop device includes a pair of end walls extending perpendicularly to and transversely of said closed loop device, said end walls being joined at their lower ends to a bottom wall extending parallel to said closed loop device.

8. The frying apparatus according to claim 7, wherein said end wall at the leading end of said food conveyor unit in the direction of movement thereof is higher than the end wall at the trailing end of the food conveyor unit, such that the leading end wall is effective to retain the unfried food articles between it and the upper paid of fixed walls during the movement of the food conveyor unit through its upper descending stretch, and to push the fried food articles between the lower pair of fixed walls and the bottom wall during the movement of the food conveyor unit through its lower ascending stretch.

9. The frying apparatus according to claim 8, wherein said bottom wall joined to the lower pair of fixed walls is perforated to permit direct contact of the food articles with the oil within the oil bath when the food articles are in the oil bath, and draining of oil from the food articles when ascending out of the oil bath.

10. The frying apparatus according to any one of claims 5 - 9, wherein said conveyor assembly includes two of said food conveyor units, each occupying one of the stretches of the closed loop device.

11. The frying apparatus according to claim 1, wherein the entrance of said housing includes a food article compartment for receiving a predetermined quantity of the food articles; said food article compartment including a wall which is pivotal to an open position to dump the food articles therein onto said conveyor assembly.

12. The frying apparatus according to claim 11, wherein said food article compartment is carried by a cover removable from said housing to provide access to the interior of said housing, including the frying compartment and the conveyor assembly therein.

13. The frying apparatus according to claim 12, wherein said conveyor assembly is driven by a motor also carried by said cover so as to be removable therewith from the housing, said motor including a quick coupling for coupling it to the conveyor assembly when the cover is attached to the housing, and for decoupling it from the conveyor assembly when the cover is detached from the housing.

14. The frying apparatus according to claim 1, wherein said frying compartment includes an indicator for indicating the level of the oil within the oil bath thereof, and an electrical switch which terminates the operation of the heater should the oil in the oil reservoir drop below a predetermined level.

15. The frying apparatus according to claim 1, wherein the apparatus further includes an oil filter unit having an inlet just below the oil level within the oil bath, and an outlet just above the bottom of the oil bath.
